# EUROPÄISCHE PATENTSCHRIFT

(11) **EP 3 691 037 B1**
(45) Veröffentlichungstag und Bekanntmachung des Hinweises auf die Patenterteilung: **22.11.2023**
(21) Anmeldenummer: 20150822.3
(22) Anmeldetag: 09.01.2020
(51) Int. Cl.: H01R 4/62, H01R 43/16, B22F 3/105, H01R 11/12

(54) **VERFAHREN ZUM AUFBRINGEN EINER ELEKTRISCHEN KONTAKTSTELLE AUF EIN ELEKTRISCHES VERBINDUNGSTEIL**
METHOD FOR APPLYING AN ELECTRICAL CONTACT POINT TO AN ELECTRICAL CONNECTION PART
PROCÉDÉ D'APPLICATION D'UN POINT DE CONTACT ÉLECTRIQUE À UNE PIÈCE DE RACCORDEMENT ÉLECTRIQUE

(30) Priorität: 01.02.2019 DE 102019102545
(43) Veröffentlichungstag der Anmeldung: 05.08.2020
(73) Patentinhaber: Auto-Kabel Management GmbH, 79688 Hausen i.W. (DE)
(72) Erfinder: Scharkowski, Oliver, 03172 Schenkendöbern OT Atterwasch (DE)
(74) Vertreter: Cohausz & Florack

(56) Entgegenhaltungen:
- EP-A1- 2 562 883
- DE-B3-102016 110 011
- US-B1- 6 363 606

## Beschreibung

Der Gegenstand betrifft ein Verfahren zum Aufbringen einer elektrischen Kontaktstelle auf ein elektrisches Verbindungsteil.

Im Automobilbau ist die Korrosionsbeständigkeit von elektrischen Verbindungsteilen von enormer Wichtigkeit. Insbesondere werden durch die Automobilhersteller immer höhere Anforderungen hinsichtlich der Funktionssicherheit und Langlebigkeit der elektrischen Bauteile gestellt.

Durch die zunehmende Elektrifizierung und Automatisierung von Kraftfahrzeugen kommt eine immer größere Anzahl von elektrischen und elektronischen Komponenten zum Einsatz. Diese müssen stets mit elektrischen Verbindungsteilen mit dem Energienetz des Kraftfahrzeugs verbunden werden. Elektrische Kabel sowie Kontakt- und Verbindungsteile werden im automotiven Bereich starken Umwelteinflüssen ausgesetzt und sind daher gut gegen Korrosion zu schützen. Aufgrund von Kosten- und Gewichtseinsparungsmaßnahmen ist es zunehmend erforderlich elektrische Verbindungsteile teilweise aus Aluminium herzustellen. Eine Verbindung von elektrischen Verbindungsteilen aus Aluminium mit anderen Komponenten oder mit Anschlussteilen ist in der Regel immer dann schwierig, wenn die anderen Komponenten aus einem anderen Metall als Aluminium gebildet sind. In einem solchen Fall können an den sortenunreinen Verbindungsstellen zwischen den elektrischen Verbindungsteilen und den anderen Komponenten bzw. den Verbindungsteilen Kontaktkorrosionen auftreten.

Die Verwendung von elektrischen Verbindungsteilen aus Aluminium kann ebenfalls insofern nachteilig für die Verbindung der elektrischen Verbindungsteile mit anderen Komponenten sein, als das sich auf der Aluminiumoberfläche der elektrischen Verbindungsteile Aluminiumoxid bildet, welches die Leitfähigkeit der elektrischen Verbindungsteile negativ beeinflusst.

Um eine zuverlässige elektrische Leitfähigkeit zwischen den elektrischen Verbindungsteilen und den mit den elektrischen Verbindungsteilen verbundenen Komponenten zu gewährleisten, ist es bekannt, elektrische Verbindungsteile in einem Kontaktbereich mit einer Beschichtung in Form einer elektrischen Kontaktstelle zu beschichten. Hierdurch kann ein elektrisches Verbindungsteil aus Aluminium beispielsweise mit einer Aluminium-Kupfer-Beschichtung versehen werden und mit einer Komponente bzw. einem Anschlussteil aus Kupfer verbunden werden.

Aus dem Stand der Technik ist es bereits bekannt, eine elektrische Kontaktstelle durch eine Beschichtung auf ein elektrisches Verbindungsteil mittels Walzplattieren oder chemischer Prozesse aufzubringen. Vorgenannte Beschichtungsverfahren sind allerdings nur bei großflächiger Anwendung geeignet, da diese bei geringen Stückzahlen unwirtschaftlich sind. Ebenfalls sind vorgenannte Verfahren ungünstig für das Aufbringen einer elektrischen Kontaktstelle auf einen relativ kleinen, vordefinierten Bereich des elektrischen Verbindungsteils.

Aus der DE 10 2016 110011 B3 ist zudem ein Verfahren nach dem Oberbegriff von Anspruch 1 zur Herstellung einer elektrischen Verbindung zwischen einem Leiter und einem Kontaktteil bekannt. Hierzu wird ein Leiterende durch Aufschmelzen zu einem Verbindungsteil geformt. Auf dem Verbindungsteil wird ein Kontaktteil schichtweise urgeformt, beispielsweise mittels 3D-Drucks, selektiven Laserschmelzens, Elektronenstrahlschmelzens, selektiven Lasersinterns oder eines anderen Schichtbauverfahrens. Die Materialzusammensetzungen können sich von Schicht zu Schicht ändern.

Die US 6,363,606 B1 lehrt ein Verfahren zum 3D-Druck von dreidimensionalen Strukturen, welche teilweise leiten und teilweise nicht leiten. Die Strukturen werden durch verschiedene (leitende und nicht leitende) Puder und einem Binder gebildet. Nach der Verfestigung werden die nicht gebundenen Anteile des Pulvers entfernt, beispielsweise abgesaugt, um so dreidimensionale Strukturen in Schichtbauweise zu erstellen.

Aus der EP 2 562 883 A1 ist es bekannt, einen Leiter aus Aluminium oder einer Aluminiumlegierung an einer Oberfläche zu beschichten. Die Beschichtung wird durch Aufsprühen eines Puders erreicht, insbesondere unter Zuhilfenahme einer Sprühmaske.

Dem Gegenstand lag die Aufgabe zugrunde, ein Verfahren zum Aufbringen einer elektrischen Kontaktstelle auf ein elektrisches Verbindungsteil anzugeben, welches eine hohe Wirtschaftlichkeit aufweisen und eine korrosionsbeständige Verbindung zwischen dem elektrischen Verbindungsteil und einer mit dem elektrischen Verbindungsteil zu verbindenden Komponente ermöglichen.

Diese Aufgabe wird gegenständlich durch ein Verfahren nach Anspruch 1 gelöst.

Dabei ist schichtweises Auftragen und Verfestigen des Beschichtungswerkstoffes vorzugsweise derart zu verstehen, dass der Beschichtungswerkstoff abwechselnd aufgetragen und verfestigt wird. Es wird also zunächst eine erste Schicht des Beschichtungswerkstoffs auf das Substrat aufgetragen und anschließend wird die aufgetragene Schicht verfestigt. Dieser Vorgang wird solange wiederholt, bis die gewünschte Form bzw. Höhe des Beschichtungswerkstoffs erreicht ist. Vorzugsweise wird der nicht verfestigte Teil des Beschichtungswerkstoffs erst entfernt, nachdem die gewünschte Form bzw. Höhe des Beschichtungswerkstoffes erreicht ist. Hierdurch kann in wirtschaftlicher Weise im Wesentlichen nur derjenige Bereich des elektrischen Verbindungsteils beschichtet werden, welcher mittels der aufgebrachten elektrischen Kontaktstelle mit einer anderen elektrischen Komponente verbunden ist. Durch die Auswahl eines geeigneten Beschichtungswerkstoffs kann eine korrosionsbeständige Verbindung der elektrischen Kontaktstelle mit einem Anschlussteil oder einer weiteren Komponente sichergestellt werden.

Es ist bevorzugt, dass das elektrische Verbindungsteil bzw. das Substrat aus einem Grundwerkstoff aus Metall, insbesondere aus Aluminium/Aluminiumlegierung oder Kupfer/Kupferlegierung, gebildet ist. Des Weiteren ist es bevorzugt, dass das nicht beanspruchte elektrische Verbindungsteil für eine automotive Anwendung ausgestaltet ist.

Nach einer Ausgestaltung ist es bevorzugt, dass die elektrische Kontaktstelle mittels eines 3D-Druckverfahrens oder mittels physikalischer Gasphasenabscheidung aufgetragen wird.

Bei der physikalischen Gasphasenabscheidung handelt es sich um ein Beschichtungsverfahren, bei welchen mithilfe physikalischer Verfahren der Beschichtungswerkstoff zunächst in die Gasphase überführt wird. Das gasförmige Material wird anschließend zum zu beschichtenden Substrat geführt, wo es kondensiert und die elektrische Kontaktstelle bzw. eine Schicht der elektrischen Kontaktstelle bildet. Vorteilhaft an der physikalischen Gasphasenabscheidung ist insbesondere, dass in zuverlässiger Weise unterschiedliche Beschichtungswerkstoffe mittels der physikalischen Gasphasenabscheidung auf das Substrat aufgetragen werden können.

Bei dem 3D-Druckverfahren handelt es sich vorzugsweise um Elektronenstrahlschmelzen, selektives Laserschmelzen, Binder Jetting oder selektives Lasersintern.

Beim Elektronenstrahlschmelzen, auch Elektronenstrahlsintern genannt, wird der Beschichtungswerkstoff mit einem Elektronenstrahl als Energiequelle gezielt aufgeschmolzen. Hierzu wird, bevorzugt in einer Vakuumatmosphäre, eine Schicht des Beschichtungswerkstoffs eingangs auf das Substrat aufgebracht. Dabei liegt der Beschichtungswerkstoff insbesondere pulverförmig vor. Der Beschichtungswerkstoff wird mittels des Elektronenstrahls zunächst großflächig vorgeheizt und anschließend punktuell geschmolzen. Nach dem Erkalten erstarrt der geschmolzene Teil des Beschichtungswerkstoffs zu einer festen Schicht des Beschichtungswerkstoffs und eine weitere Schicht des Beschichtungswerkstoffs kann auf die erkaltete und feste Schicht des Beschichtungswerkstoffs aufgetragen und geschmolzen werden. Der vorgenannte Prozess wird solange wiederholt, bis die gewünschte Form beziehungsweise Höhe der elektrischen Kontaktstelle erreicht ist. Anschließend wird der nicht verfestigte bzw. nicht geschmolzene Teil des Beschichtungswerkstoffs abgesaugt. Mittels des Elektronenstrahlschmelzens lassen sich in wirtschaftlicher Weise auch kleinere Serien des elektrischen Anschlussteils mit einer elektrischen Kontaktstelle fertigen und es werden keine Kosten für bauteilspezifische Werkzeuge benötigt.

Beim selektiven Laserschmelzen und beim selektiven Lasersintern wird der Beschichtungswerkstoff, vorzugsweise in Pulverform, in einer Schicht auf dem Substrat angeordnet. Mittels einer Laserstrahlung wird die auf dem Substrat angeordnete Schicht des Beschichtungswerkstoffs geschmolzen und bildet nach der Erstarrung eine erste Schicht der elektrischen Kontaktstelle. Anschließend wird das Substrat um eine Schichtdicke abgesenkt und der Vorgang wird solange wiederholt, bis alle Schichten der elektrischen Kontaktstelle aufgebracht und geschmolzen wurden sowie erkaltet sind. Abschließend wir die elektrische Kontaktstelle von dem nicht verfestigten Teil des Beschichtungswerkstoffes gereinigt.

Laserschmelzen und Lasersintern unterscheiden sich lediglich dadurch, dass der Beschichtungswerkstoff beim Laserschmelzen soweit aufgeschmolzen wird, dass sich der Beschichtungswerkstoff mit umliegendem Material verbindet. Beim Lasersintern wird der Beschichtungswerkstoff nicht vollständig aufgeschmolzen, sondern nur partiell erhitzt, so dass sich der Beschichtungswerkstoff nur teilweise mit dem umliegenden Material verbindet.

Auch durch selektives Laserschmelzen bzw. selektives Laserstrahlsintern ist eine formlose Fertigung der elektrischen Kontaktstelle möglich, wodurch kleine Serien von elektrischen Verbindungsteilen mit elektrischen Kontaktstellen in wirtschaftlicher Weise produziert werden können.

Beim Binder Jetting wird zunächst eine erste Schicht des Beschichtungswerkstoffs auf das Substrat aufgetragen. Anschließend wird ein Binder, also ein flüssiges Bindemittel, gezielt auf die erste Schicht des Beschichtungswerkstoffs aufgetragen, um sich mit dem Beschichtungswerkstoff und dem Substrat zu verbinden. Nachfolgend wird eine weitere Schicht des Beschichtungswerkstoffs hinzugefügt, um die nächste Schicht zu bilden, auf welche ebenfalls ein Binder aufgetragen wird. Dieser Vorgang wird wiederholt, bis die gewünschte Höhe bzw. Form der elektrischen Kontaktstelle erreicht ist. Anschließend wird der nicht mit dem Binder verbundene Beschichtungswerkstoff und bevorzugt ein Teil des Binders entfernt. Es ist ebenfalls möglich, die elektrische Kontaktstelle zur Erhöhung ihrer Festigkeit nach dem Binder Jetting zu sintern. In vorteilhafter Weise ist beim Binder Jetting kein Form oder Stützmaterial vonnöten, so dass auch geringe Losgrößen von elektrischen Verbindungsteilen mit elektrischen Kontaktstellen in wirtschaftlicher Weise gefertigt werden können. Ebenfalls können verschiedene Binder verwendet werden, wodurch die Eigenschaften der elektrischen Kontaktstelle zuverlässig eingestellt werden können.

Gemäß einem Ausführungsbeispiel wird der Beschichtungswerkstoff schichtweise in Form eines Pulvers auf das Substrat aufgetragen. Dies ist insbesondere bei Nutzung der vorgenannten 3D-Druckverfahren vorteilhaft.

Der Beschichtungswerkstoff wird erfindungsgemäß in eine auf dem Grundwerkstoff angeordnete Maske gefüllt und der Beschichtungswerkstoff wird mittels der Maske mit dem Grundwerkstoff stoffschlüssig verbunden. Die Anordnung einer Maske auf dem Grundwerkstoff bzw. auf dem Substrat erleichtert das Auftragen des Beschichtungswerkstoffs, insbesondere falls der Beschichtungswerkstoff pulverförmig oder flüssig ausgestaltet ist.

Gemäß einem weiteren Ausführungsbeispiel ist der Beschichtungswerkstoff als Legierung gebildet, wobei die Legierung einen Anteil vom Material des Grundwerkstoffs des elektrischen Verbindungsteils aufweist. Dementsprechend weist die Legierung zumindest einen geringen Masseanteil des Materials des Grundwerkstoffs auf. Beispielsweise ist der Beschichtungswerkstoff als Aluminium-Kupfer-Legierung gebildet. Durch eine Anordnung eines Anteils vom Material des Grundwerkstoffs in dem Beschichtungswerkstoff wird die elektrochemische Akzeptanz zwischen dem Beschichtungswerkstoff und dem Grundwerkstoff verbessert. Ebenfalls können Kontaktkorrosionen zwischen dem Grundwerkstoff und dem Beschichtungswerkstoff reduziert werden.

Es ist weiter bevorzugt, dass der Anteil des Materials des Grundwerkstoffs in dem Beschichtungswerkstoff beim Auftragen der einzelnen Schichten des Beschichtungswerkstoffs schichtweise reduziert wird. Hierdurch weisen näher an dem Grundwerkstoff angeordnete Schichten des Beschichtungswerkstoffes einen größeren Anteil vom Material des Grundwerkstoffs auf als weiter entfernte Schichten des Beschichtungswerkstoffes. Somit kann eine elektrische Kontaktstelle zur Verfügung gestellt werden, welcher einerseits in ihrem Kontaktbereich mit dem Grundwerkstoff einen hohen Anteil vom Material des Grundwerkstoffs aufweist und andererseits in ihrem Kontaktbereich mit einer weiteren Komponente oder einem Anschlussteil einen hohen Anteil vom Material der zu verbindenden Komponente aufweist. Demnach können sortenunreine Verbindungen und dadurch entstehende Kontaktkorrosionen reduziert werden. Falls der Grundwerkstoff aus Aluminium besteht, weist die elektrische Kontaktstelle in ihrem Kontaktbereich mit dem Grundwerkstoff beispielsweise einen hohen Masseanteil an Aluminium auf. Die mit der elektrischen Kontaktstelle zu verbindende Komponente besteht aus Kupfer, so dass die elektrische Kontaktstelle in ihrem Kontaktbereich mit der Komponente einen hohen Masseanteil an Kupfer aufweist. Die einzelnen Schichten der elektrischen Kontaktstelle weisen in einem solchen Ausführungsbeispiel, je weiter sie sich von dem Substrat entfernt befinden, einen zunehmenden Masseanteil an Kupfer auf.

Nach einem weiteren Ausführungsbeispiel ist es bevorzugt, dass nach dem Aufbringen des Beschichtungswerkstoffs auf das Substrat ein Zusatzwerkstoff im Bereich der elektrischen Kontaktstelle des elektrischen Verbindungsteils schichtweise aufgetragen wird, dass zumindest ein Teil des Zusatzwerkstoffs schichtweise verfestigt wird und dass der nicht verfestigte Teil des Zusatzwerkstoffs entfernt wird. Es ist bevorzugt, dass der Zusatzwerkstoff ebenfalls pulverförmig auf den bereits beschichteten lokalen Bereich des elektrischen Verbindungsteils aufgetragen wird. Es ist ebenfalls bevorzugt, dass der Zusatzwerkstoff mittels der vorgenannten 3D-Druckverfahren oder mittels physikalischer Gasphasenabscheidung aufgebracht wird. Der Zusatzwerkstoff kann auch als Legierung ausgestaltet sein. Der Zusatzwerkstoff kann ebenfalls als Legierung gebildet sein, wobei die Legierungszusammensetzung der einzelnen Schichten des Zusatzwerkstoffs variieren kann.

Nach einem weiteren Ausführungsbeispiel ist es bevorzugt, dass der Beschichtungswerkstoff in der elektrochemischen Spannungsreihe zwischen dem Grundwerkstoff und dem Zusatzwerkstoff liegt. Aufgrund des Auftragens von Beschichtungswerkstoff und Zusatzwerkstoff auf dem Grundwerkstoff zum Aufbringen der elektrischen Kontaktstelle kann eine hohe elektrochemische Akzeptanz zwischen den unterschiedlichen Werkstoffen sichergestellt werden. Dies ist insbesondere hinsichtlich der Korrosionsbeständigkeit einer Verbindung des Verbindungsteils mit einem Anschlussteil bzw. einer weiteren Komponente vorteilhaft.

Ein weiterer nicht beanspruchter Aspekt betrifft ein elektrisches Verbindungsteil, vorzugsweise zur automotiven Anwendung, mit einem aus einem metallischen Grundwerkstoff gebildeten Substrat und mit einer auf einer Oberfläche des Substrats aufgebrachten elektrischen Kontaktstelle, wobei die elektrische Kontaktstelle mittels eines Verfahrens gemäß einem der Ansprüche 1 bis 8 auf das Substrat aufgebracht ist.

Es ist bevorzugt, dass das nicht beanspruchte elektrische Verbindungsteil als elektrisches Kraftfahrzeugkabel, als elektrisches Kraftfahrzeugkabelverbindungsteil oder als Batteriezellverbinder gebildet ist. Ein Batteriezellenverbinder kann in der Batterietechnik in zuverlässiger Weise einen aus Kupfer gebildeten Pol und einen aus Aluminium gebildeten Pol miteinander verbinden, wodurch auftretende Korrosion reduziert werden kann.

Hinsichtlich der Verbindung des elektrischen Verbindungsteils mit weiteren Komponenten oder Anschlussteilen ist es vorteilhaft, dass die elektrische Kontaktstelle eine Aussparung oder einen Vorsprung zur Verbindung des elektrischen Verbindungsteils mit einem Anschlussteil oder einer weiteren Komponente aufweist. Nachfolgend wird der Gegenstand anhand einer Ausführungsbeispiele zeigenden Zeichnung näher erläutert. In der Zeichnung zeigen:
- Fig. 1a: eine schematische Ansicht eines erfindungsgemäßen Ausführungsbeispiels eines Verfahrens zum Aufbringen einer elektrischen Kontaktstelle auf ein elektrisches Verbindungsteil,
- Fig. 1b: eine schematische Ansicht eines gemäß des in Fig. 1a gezeigten Verfahrens hergestellten elektrischen Verbindungsteils,
- Fig. 2a: eine schematische Ansicht eines weiteren nicht beanspruchten Ausführungsbeispiels eines Verfahrens zum Aufbringen einer elektrischen Kontaktstelle auf ein elektrisches Verbindungsteil,
- Fig. 2b: eine schematische Ansicht eines gemäß des in Fig. 2a gezeigten Verfahrens hergestellten elektrischen Verbindungsteils,
- Fig. 3a: eine schematische Ansicht eines weiteren nicht beanspruchten Ausführungsbeispiels eines Verfahrens zum Aufbringen einer elektrischen Kontaktstelle auf ein elektrisches Verbindungsteil,
- Fig. 3b: eine schematische Ansicht eines gemäß des in Fig. 3a gezeigten Verfahrens hergestellten elektrischen Verbindungsteils,
- Fig. 4: eine schematische Ansicht eines mit einem Anschlussteil verbundenen elektrischen Verbindungsteils und
- Fig. 5: eine schematische Ansicht eines weiteren nicht beanspruchten Ausführungsbeispiels eines elektrischen Verbindungsteils.

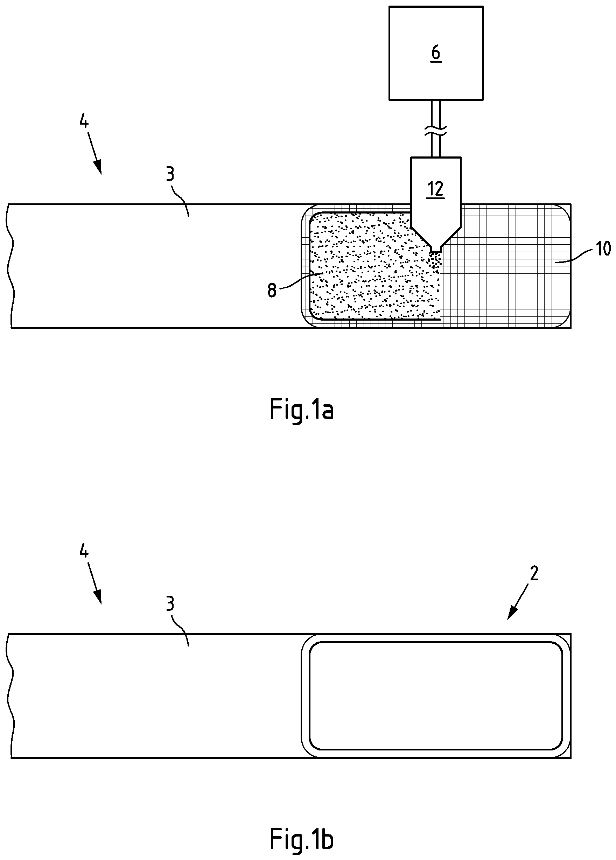

Fig. 1a zeigt eine schematische Ansicht eines Ausführungsbeispiels eines Verfahrens zum Aufbringen einer elektrischen Kontaktstelle 2 auf ein elektrisches Verbindungsteil 4, wobei das elektrische Verbindungsteil 4 aus einem metallischen Substrat 3gebildet ist. Das elektrische Verbindungsteil 4 ist vorliegend als Flachleiter ausgestaltet. Mittels eines 3D-Druckers 6 und einer an dem 3D-Drucker angeordneten Düse 12 wird ein pulverförmiger Beschichtungswerkstoff 8 schichtweise in eine auf dem Substrat 3 angeordnete Maske 10 gefüllt und schichtweise verfestigt. Hierdurch wird die, bevorzugt rasterartig, gebildete Maske 10 mit dem Beschichtungswerkstoff 8 und dem elektrischen Verbindungsteil 4 vorzugsweise stoffschlüssig verbunden. Nach Auftragen und Verfestigen des Beschichtungswerkstoffs 8 wird der nicht verfestigte Teil des Beschichtungswerkstoffs 8 vorzugsweise mittels des 3D-Druckers 6 entfernt bzw. abgesaugt.

Fig. 1b zeigt ein derart mit einer elektrischen Kontaktstelle 2 beschichtetes elektrisches Verbindungsteil 4. Es ist erkennbar, dass die elektrische Kontaktstelle 2 an einem definierten lokalen Bereich des elektrischen Verbindungsteils 4 gebildet ist.

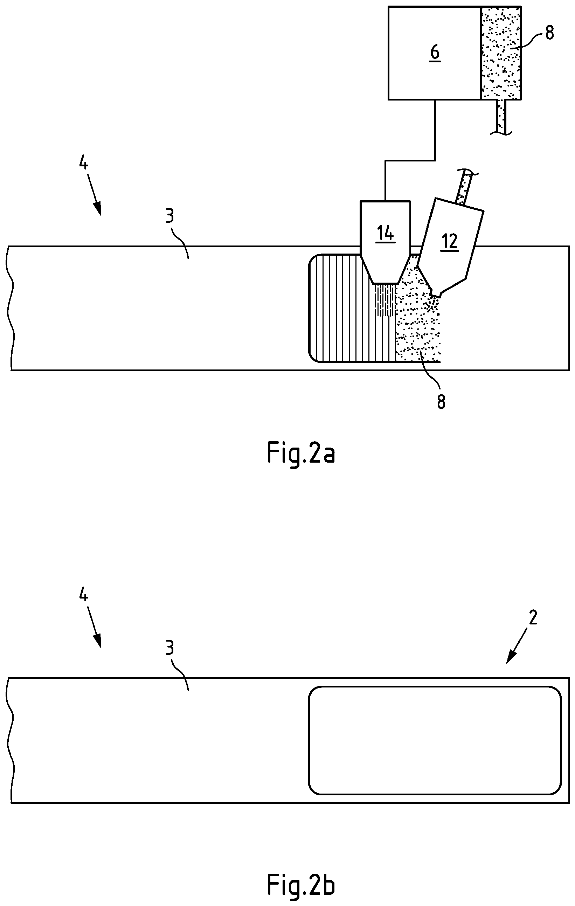

In Fig. 2a ist ein weiteres nicht beanspruchtes Ausführungsbeispiel eines Verfahrens zum Aufbringen einer elektrischen Kontaktstelle 2 auf ein elektrisches Verbindungsteil 4 dargestellt. Zum Aufbringen der elektrischen Kontaktstelle 2 wird der in einem 3D-Drucker 6 angeordnete Beschichtungswerkstoff 8 schichtweise auf das elektrische Verbindungsteil 4 mittels der Düse 12 aufgetragen. Anschließend wird der aufgetragene Beschichtungswerkstoff 8 mittels einer weiteren an dem 3D-Drucker 6 angeordneten Düse 14 schichtweise verfestigt. Die Düse 14 kann beispielsweise durch einen Laserstrahl ersetzt werden. Nach Erreichen der gewünschten Form bzw. Höhe der elektrischen Kontaktstelle 2 wird der nicht verfestigte Teil des Beschichtungswerkstoffs mittels des 3D-Druckers 6 entfernt bzw. abgesaugt. Ein nach dem in Fig. 2a dargestellten Verfahren hergestelltes elektrisches Verbindungsteil 4 mit einer elektrischen Kontaktstelle 2 ist in Fig. 2b dargestellt.

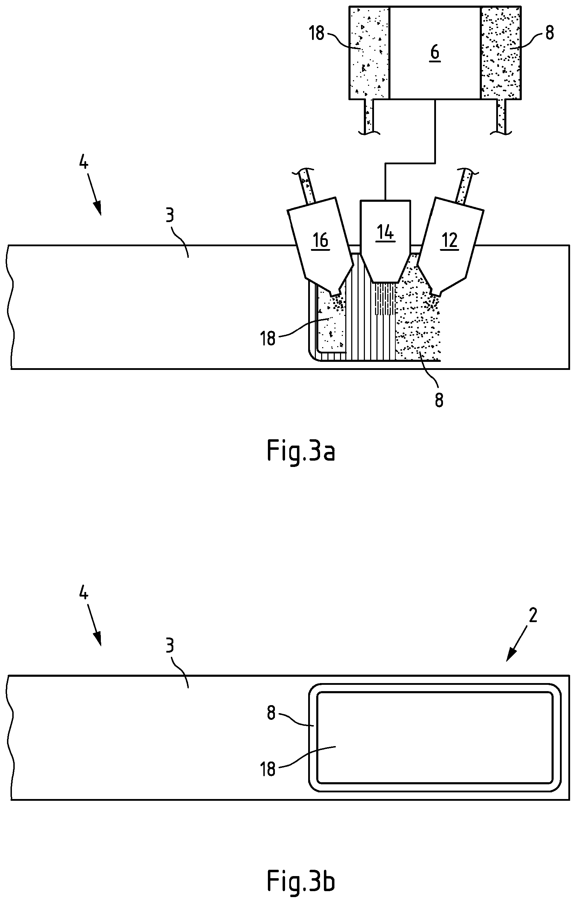

Fig. 3a zeigt eine schematische Ansicht eines weiteren nicht beanspruchten Ausführungsbeispiels eines Verfahrens zum Aufbringen einer elektrischen Kontaktstelle 2 auf ein elektrisches Verbindungsteil 4. Im Unterschied zu dem in Fig. 2a dargestellten Ausführungsbeispiel weist der 3D-Drucker 6 drei Düsen 12, 14 und 16 auf. Ebenfalls sind in dem 3D-Drucker 6 ein Beschichtungswerkstoff 8 sowie ein Zusatzwerkstoff 18 gelagert. Zum Auftragen der elektrischen Kontaktstelle 2 wird zunächst der Beschichtungswerkstoff 8 schichtweise mittels der Düse 12 auf das elektrische Verbindungsteil 4 aufgetragen und mittels der Düse 14 schichtweise verfestigt. Optional kann der nicht verfestigte Beschichtungswerkstoff 8 nachfolgend entfernt werden. Anschließend wird der Zusatzwerkstoff 18 mittels der Düse 16 schichtweise aufgetragen und mittels der Düse 14 schichtweise verfestigt. Abschließend wird der nicht verfestigte Zusatzwerkstoff 18 und gegebenenfalls der nicht verfestigte Beschichtungswerkstoff 8 entfernt bzw. abgesaugt.

Hierdurch kann eine elektrische Kontaktstelle 2 aufgetragen werden, die sich aus unterschiedlichen Legierungen zusammensetzt. Wenn das Substrat 3 beispielsweise aus Aluminium gefertigt ist und mit einem Anschlussteil 20 bzw. einer Komponente aus Kupfer verbunden werden soll, setzt sich der Beschichtungswerkstoff 8 bevorzugt aus einer Legierung zusammen, die insbesondere Aluminium und Kupfer aufweist, wobei der Masseanteil an Aluminium bevorzugt größer ist als der Masseanteil an Kupfer. Der Zusatzwerkstoff 18 setzt sich bevorzugt ebenfalls aus einer Legierung zusammen, die insbesondere Aluminium und Kupfer aufweist, wobei der Masseanteil an Kupfer bevorzugt größer ist als der Masseanteil an Aluminium. Indem eine elektrische Kontaktstelle 2 aufgetragen wird, die sich aus einem derartigen Beschichtungswerkstoff 8 und Zusatzwerkstoff 18 zusammensetzt, kann die elektrochemische Akzeptanz des elektrischen Verbindungsteils 4 und dem Anschlussteil 20 bzw. und der anzuschließenden Komponente verbessert werden. Fig. 3b zeigt ein nach vorgenanntem Verfahren hergestelltes elektrisches Verbindungsteil 4 mit einer elektrischen Kontaktstelle 2, die sich aus dem Beschichtungswerkstoff 8 und dem auf den Beschichtungswerkstoff 8 aufgetragenen Zusatzwerkstoff 18 zusammensetzt.

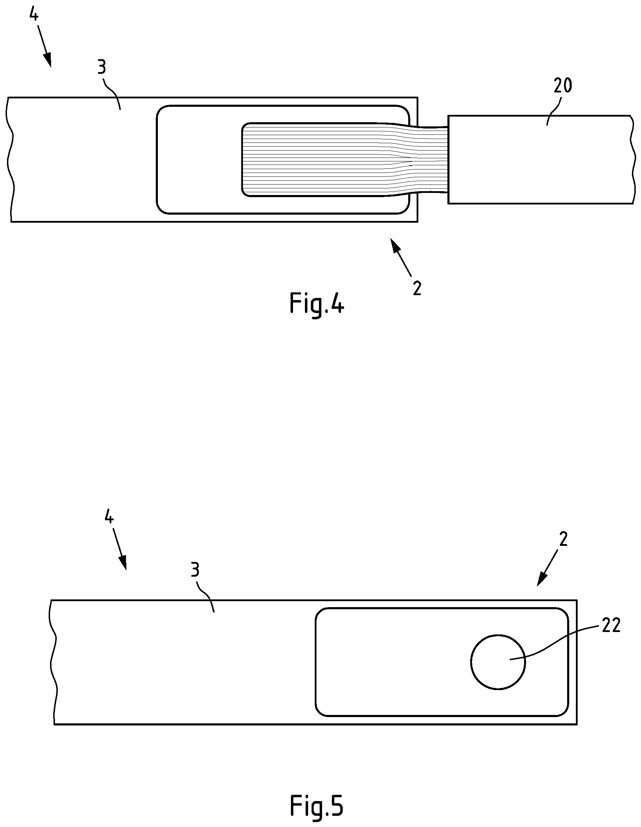

Fig. 4 zeigt eine schematische Ansicht eines mit einem Anschlussteil 20 verbundenen elektrischen Verbindungsteils 4, wobei das Anschlussteil 20 mittels der elektrischen Kontaktstelle 2 mit dem elektrischen Verbindungsteil 4 verbunden ist. Dabei kann das Anschlussteil 20 beispielsweise form-, kraft- und/oder stoffschlüssig mit dem elektrischen Verbindungsteil 4 verbunden sein.

In Fig. 5 ist eine schematische Ansicht eines weiteren nicht beanspruchten Ausführungsbeispiels eines elektrischen Verbindungsteils 4 dargestellt, wobei das elektrische Verbindungsteil 4 im Bereich der Kontaktstelle 2 eine in Form eines Durchgangslochs ausgestaltete Aussparung 22 aufweist. Mittels der Aussparung 22 kann beispielsweise ein Anschlussteil 20 mit dem elektrischen Verbindungsteil verbunden werden.

## Patentansprüche

1. Verfahren zum Aufbringen einer elektrischen Kontaktstelle (2) auf ein elektrisches Verbindungsteil (4), wobei das elektrische Verbindungsteil (4) aus einem metallischen Substrat (3) gebildet ist, umfassend die Schritte:
- schichtweises Auftragen eines Beschichtungswerkstoffs (8) auf das aus einem metallischen Grundwerkstoff gebildeten Substrat im Bereich der aufzubringenden elektrischen Kontaktstelle (2),
- schichtweises Verfestigen zumindest eines Teils des aufgetragenen Beschichtungswerkstoffes (8),
**dadurch gekennzeichnet,**
- **dass** der Beschichtungswerkstoff (8) in eine auf dem Grundwerkstoff angeordnete Maske (10) gefüllt wird und
- **dass** der Beschichtungswerkstoff (8) mittels der Maske (10) mit dem Grundwerkstoff stoffschlüssig verbunden wird, und weiter **gekennzeichnet durch** ein Entfernen des nicht verfestigten Teils des Beschichtungswerkstoffs (8).

2. Verfahren nach Anspruch 1,
**dadurch gekennzeichnet,**
- **dass** die elektrische Kontaktstelle (2) mittels eines 3D-Druckverfahrens oder mittels physikalischer Gasphasenabscheidung aufgetragen wird.

3. Verfahren nach einem der vorhergehenden Ansprüche,
**dadurch gekennzeichnet,**
- **dass** die elektrische Kontaktstelle (2) mittels Elektronenstrahlschmelzen, selektivem Laserschmelzen, Binder Jetting oder selektivem Lasersintern aufgetragen wird.

4. Verfahren nach einem der vorhergehenden Ansprüche,
**dadurch gekennzeichnet,**
- **dass** der Beschichtungswerkstoff (8) schichtweise in Form eines Pulvers auf das Substrat aufgetragen wird.

5. Verfahren nach einem der vorhergehenden Ansprüche,
**dadurch gekennzeichnet,**
- **dass** der Beschichtungswerkstoff (8) als Legierung gebildet ist und
- **dass** die Legierung einen Anteil vom Material des Grundwerkstoffs des elektrischen Verbindungsteils (4) aufweist.

6. Verfahren nach einem der vorhergehenden Ansprüche,
**dadurch gekennzeichnet,**
- **dass** der Anteil des Materials des Grundwerkstoffs in dem Beschichtungswerkstoff (8) beim Auftragen schichtweise reduziert wird.

7. Verfahren nach einem der vorhergehenden Ansprüche,
**dadurch gekennzeichnet,**
- **dass** nach dem Aufbringen des Beschichtungswerkstoffs (8) auf das Substrat ein Zusatzwerkstoff (18) im Bereich der elektrischen Kontaktstelle (2) des elektrischen Verbindungsteils (4) schichtweise aufgetragen wird,
- **dass** zumindest ein Teil des Zusatzwerkstoffs (18) schichtweise verfestigt wird und
- **dass** der nicht verfestigte Teil des Zusatzwerkstoffs (18) entfernt wird.

8. Verfahren nach einem der vorhergehenden Ansprüche,
**dadurch gekennzeichnet,**
- **dass** der Beschichtungswerkstoff (8) in der elektrochemischen Spannungsreihe zwischen dem Grundwerkstoff und dem Zusatzwerkstoff (18) liegt.

## Claims

1. Method for applying an electrical contact point (2) to an electrical connection part (4), the electrical connection part (4) being formed from a metallic substrate (3), comprising the steps:
- layer-by-layer application of a coating material (8) to the substrate formed from a metallic base material in the region of the electrical contact point (2) to be applied,
- layer-by-layer solidification of at least part of the applied coating material (8), **characterized in**
- **that** the coating material (8) is filled into a mask (10) arranged on the base material, and
- **that** the coating material (8) is bonded to the base material by means of the mask (10), and further **characterized by** a removal of the non-solidified part of the coating material (8).

2. Method according to claim 1,
**characterized in**
- **that** the electrical contact point (2) is applied by means of a 3D printing process or by means of physical vapor deposition.

3. Method according to any one of the preceding claims,
**characterized in**
- **that** the electrical contact point (2) is applied by means of electron beam melting, selective laser melting, binder jetting or selective laser sintering.

4. Method according to any one of the preceding claims,
**characterized in**
- **that** the coating material (8) is applied to the substrate in layers in the form of a powder.

5. Method according to any one of the preceding claims,
**characterized in**
- **that** the coating material (8) is formed as an alloy and
- **that** the alloy comprises a proportion of the material of the base material of the electrical connection part (4).

6. Method according to any one of the preceding claims,
**characterized in**
- **that** the proportion of the material of the base material in the coating material (8) is reduced layer by layer during application.

7. Method according to any one of the preceding claims,
**characterized in**
- **that** after the coating material (8) has been applied to the substrate, a filler material (18) is applied in layers in the region of the electrical contact point (2) of the electrical connection part (4),
- **that** at least part of the filler material (18) is solidified in layers, and
- **that** the non-solidified part of the filler material (18) is removed.

8. Method according to any one of the preceding claims,
**characterized in**
- **that** the coating material (8) lies in the electrochemical voltage series between the base material and the filler material (18).

## Revendications

1. Procédé pour appliquer un point de contact électrique (2) sur une pièce de connexion électrique (4), où la pièce de connexion électrique (4) est formée d'un substrat métallique (3), comprenant les étapes:
- application par couches d'un matériau de revêtement (8) sur le substrat formé d'un matériau de base métallique dans la zone du point de contact électrique (2) à appliquer,
- solidification par couches d'au moins une partie du matériau de revêtement (8) appliqué,
**caractérisé en ce**
- **que** le matériau de revêtement (8) est rempli dans un masque (10) disposé sur le matériau de base et
- **que** le matériau de revêtement (8) est relié au matériau de base par liaison de matière au moyen du masque (10), et **caractérisé en outre par** une élimination de la partie non solidifiée du matériau de revêtement (8).

2. Procédé selon la revendication 1,
**caractérisé en ce**
- **que** le point de contact électrique (2) est appliqué au moyen d'un procédé d'impression 3D ou d'un dépôt physique en phase vapeur.

3. Procédé selon l'une des revendications précédentes,
**caractérisé en ce**
- **que** le point de contact électrique (2) est appliqué au moyen d'une fusion par faisceau d'électrons, d'une fusion sélective au laser, de binder jetting ou d'un frittage sélectif au laser.

4. Procédé selon l'une des revendications précédentes,
**caractérisé en ce**
- **que** le matériau de revêtement (8) est appliqué par couches sous forme de poudre sur le substrat.

5. Procédé selon l'une des revendications précédentes,
**caractérisé en ce**
- **que** le matériau de revêtement (8) est formé comme un alliage et
- **que** l'alliage comprend une partie du matériau de base de la pièce de connexion électrique (4).

6. Procédé selon l'une des revendications précédentes,
**caractérisé en ce**
- **que** la proportion du matériau de base dans le matériau de revêtement (8) est réduite par couches lors de l'application.

7. Procédé selon l'une des revendications précédentes,
**caractérisé en ce**
- **qu'**après l'application du matériau de revêtement (8) sur le substrat, un matériau supplémentaire (18) est appliqué par couches dans la zone du point de contact électrique (2) de la pièce de connexion électrique (4),
- **qu'**au moins une partie du matériau supplémentaire (18) est solidifiée par couches, et
- **que** la partie non consolidée du matériau supplémentaire (18) est éliminé.

8. Procédé selon l'une des revendications précédentes,
**caractérisé en ce**
- **que** le matériau de revêtement (8) se situe dans la série de tensions électrochimiques entre le matériau de base et le matériau supplémentaire (18).
